# EUROPÄISCHE PATENTSCHRIFT

(11) **EP 2 020 352 B1**
(45) Veröffentlichungstag und Bekanntmachung des Hinweises auf die Patenterteilung: **06.10.2010**
(21) Anmeldenummer: 08405168.9
(22) Anmeldetag: 01.07.2008
(51) Int. Cl.: B60S 11/00, B62D 25/20

(54) **Wagenheberkonsole**
Bracket for receiving a jack
Ensemble de logement de cric

(30) Priorität: 24.07.2007 CH 11782007
(43) Veröffentlichungstag der Anmeldung: 04.02.2009
(73) Patentinhaber: Kunststoff Schwanden AG, 8762 Schwanden (CH)
(72) Erfinder: Kiener, Albert, 8753 Mollis (CH)
(74) Vertreter: Quehl, Horst Max

(56) Entgegenhaltungen:
- EP-A2- 1 291 255
- DE-B3-102006 008 306
- DE-B3-102007 012 931
- DE-C1- 19 831 548

## Beschreibung

Die Erfindung betrifft eine Wagenheberkonsole für die Befestigung an einem Fahrzeugboden mit den Merkmalen des Oberbegriffs des Patentanspruchs 1

Wagenheberkonsolen dieser Art sind in Anwendung an einigen auf dem Markt befindlichen Fahrzeugen bekannt und beispielsweise in der EP 1 291 255 und der DE 198 31 548 beschrieben. Ihre Befestigung erfolgt an vier Stellen des Fahrzeuges, derart, dass sie dort jeweils ein bereits für die Hohlraum-Korrosionsschutzbehandlung vorgesehenes Bodenloch in einem Tragprofil des Fahrzeugbodens verschliessen. Hierzu haben diese bekannten Wagenheberkonsolen einen in das Bodenloch eingreifenden Fortsatz und zusätzliche Klinkenkörper, nach deren Einrasten mindestens eine entlang der Konsole umlaufende Dichtlippe dichtend angepresst wird. Es hat sich aber gezeigt, dass eine solche Befestigung, insbesondere nach Benutzung mit einem Wagenheber, nicht ausreichend fest und dauerhaft ist, auch wenn zwischen der Stützfläche und dem Fahrzeugboden eine Klebefolie vorgesehen wird, da die z.B. Wachs verwendende Korrosionsschutzbehandlung eine zuverlässige Klebebefestigung verhindert. Es besteht die Möglichkeit, dass solche Konsolen bei Gebrauch weggedrückt und somit unbrauchbar werden und folglich Feuchtigkeit in die hohle Profilkonstruktion des Fahrzeugbodens eindringt.

Der Erfindung liegt die Aufgabe zugrunde, die genannten Nachteile zu vermeiden und somit eine Wagenheberkonsole zu finden, die sich auf einfache Weise herstellen und am Fahrzeugboden fester montieren lässt und somit eine gute und dauerhafte Abdichtung des Bodenlochs gewährleistet.

Die Lösung dieser Aufgabe erfolgt erfindungsgemäss aufgrund der Merkmale des Patentanspruchs 1.

Im Folgenden wird die Erfindung anhand eines in den Zeichnungen dargestellten Ausführungsbeispieles beschrieben. Es zeigt:
Fig.1 einen Längsschnitt einer fertig montierten Wagenheberkonsole,
Fig.2 eine Darstellung entsprechend Fig. 1 vor dem Einrasten und Verriegeln am Aufnahmeloch eines Fahrzeugbodens und
Fig.3 eine perspektivische Ansicht der Wagenheberkonsole nach Fig.1.

Die Wagenheberkonsole 1 hat einen Konsolenkörper 2 mit einem nach unten offenen Eingriffsraum 3 für den Eingriffsbock eines nicht dargestellten Wagenhebers. Er hat beispielsweise eine Länge von 105 mm und eine Breite von 60 mm und ist zusammen mit einem zentral von ihm abstehenden, zapfenförmigen Zentrierkörper 4 in Spritzgiesstechnik in einem Stück aus einem schlagfesten Kunststoff hoher Festigkeit hergestellt.

Der zapfenförmige Zentrierkörper 4 dient u.a. als Montagehilfe für die exakte Positionierung der Wagenheberkonsole 1 an einem vom Fahrzeughersteller beispielsweise für die Hohlraumbehandlung im Fahrzeugboden 5 vorgesehenes Wandloch 6. Hierzu kann angrenzend an den Konsolenkörper 2 ein umlaufender, zum Konsolenkörper 2 hin konischer Kragen 7 vorgesehen sein, der dem Durchmesser dieses Lochs angepasst ist.

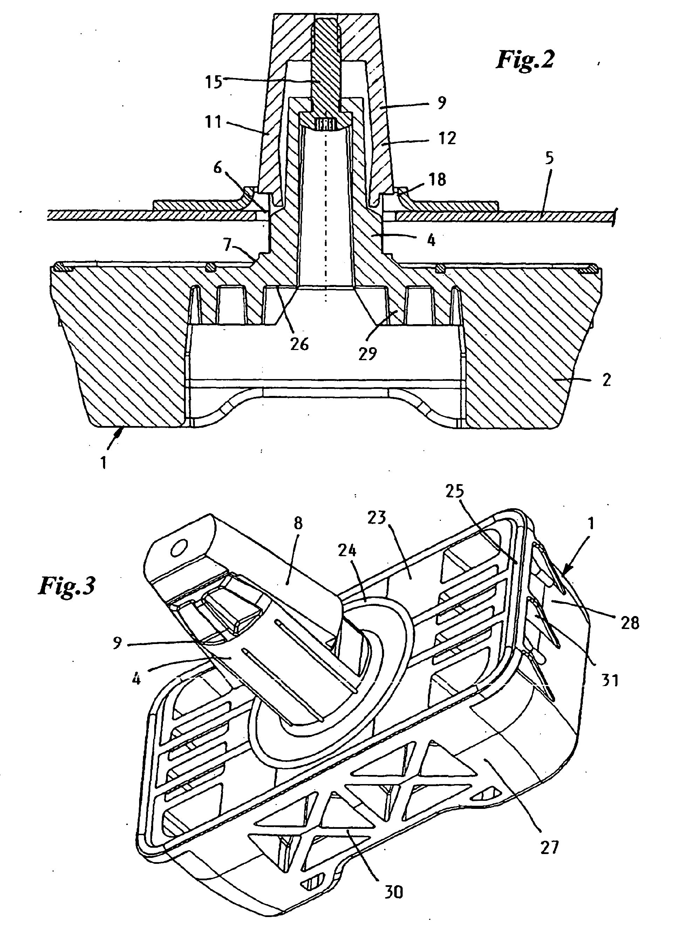

Der Zentrierkörper 4 ist in einem äusseren Klinkenkörper 8 eingeschlossen, so dass beide einen der festen Verriegelung am Wandloch 6 dienenden, mehrteiligen Fortsatz 9 bilden. Der Klinkenkörper 8 hat hierzu beispielsweise zwei von seinem zentralen Kopfteil 10 beidseitig abstehende Klinkenschenkel 11, 12, die beim Eindrücken des Fortsatzes 9 in das Wandloch 6 durch Gleitkontakt ihrer äusseren Schrägflächen 13 mit dem Lochrand federelastisch nach innen gedrückt werden und anschliessend den Lochrand übergreifend von der in Fig. 2 dargestellten Position nach aussen schnappen.

Beim Gleiten des Fortsatzes 9 entlang der Schrägflächen 13, 14 der Klinkenschenkel 11, 12 wird dieser auch zur Lochachse hin zentriert, so dass der umlaufende Kragen 7 seines Zentrierzapfens 4 auf einfache Weise seine Position in dem Wandloch 6 findet.

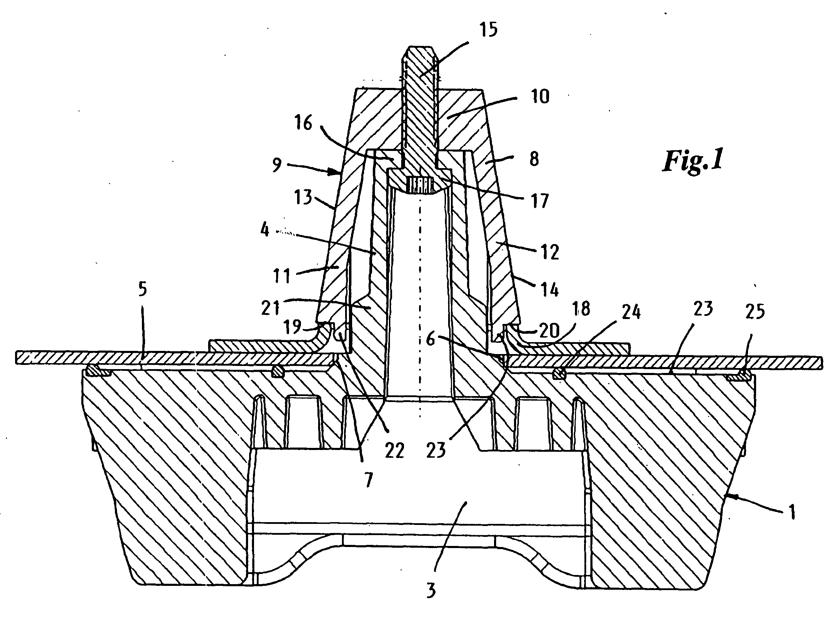

Um die Wagenheberkonsole 1 anschliessend fest am Wandloch 6 zu verriegeln und zu verspannen, sind der Zentrierkörper 4 und der Klinkenkörper 8 über eine zentrale Spannschraube 15 axial verstellbar miteinander verbunden. Hierzu ist der Zentrierkörper 4 auf Material sparende Weise hohl ausgeführt und hat eine Stirnwand 16, durch die hindurch sich die Spannschraube 15 erstreckt und an der ihr Kopf 17 anliegt, so dass sie durch Gewindeeingriff mit dem Kopfteil 10 des Klinkenkörpers 8 diesen mit seinen Schenkeln 11, 12 gegen den nach innen zurückversetzten Teil 18 des Wandlochrandes 6 bewegen, bis ihre endseitige Stützfläche 19,20 zur festen Anlage an der Innenseite des Fahrzeugbodens 5 gelangt. Gleichzeitig hat sich dabei ein sockelartig erweiterter Bereich 21 des Zentrierkörpers 4 in Eingriff mit der dann achsparallel verlaufenden Innenseite der Klinkenschenkel 11,12 bewegt, so dass diese in der in Fig.1 gezeigten äusseren Rastposition blockiert bzw. fest verriegelt sind. Dabei gelangt eine inneres, verlängertes Schenkelende 22,23 in Eingriff mit dem nach innen versetzten Teil 18 des Wandlochrandes 6.

Die Spannschraube 15 erfüllt die weitere Aufgabe, die Stützfläche 23 des Konsolenkörpers 2 mit umlaufenden, weichelastischen Dichtrippen 24, 25 fest gegen den Fahrzeugboden 5 zu verspannen, so dass eine feste Verbindung der Wagenheberkonsole 1 mit dem Fahrzeugboden 5 bei zuverlässiger Abdichtung des Wandlochs 6 gewährleistet ist. Die Spannschraube 15 führt ausserdem zu dem Vorteil, dass die Verspannung und Verriegelung der Wagenheberkonsole 1 auch bei unterschiedlichen Dicken der Bodenwand 5 im Bereich des Bodenlochs 6 und damit für verschiedene Fahrzeugtypen gewährleistet ist.

Die weichelastischen Dichtrippen 24, 25 können in Spritzgiesstechnik mit verschiedenen Querschnittsformen, z.B. o-ringartig direkt an den Konsolenkörper 2 angeformt werden. Entsprechend der Darstellung in Fig.3 umschliesst eine innere, endlose Dichtrippe 24 konzentrisch und somit nahe am Wandloch 6 den Kragen 7 des Zentrierkörpers 4 und eine zweite endlose Dichtrippe 25 verläuft parallel zur Aussenkontur des Konsolenkörpers 2.

Zur Einsparung von Material für die Herstellung der Wagenheberkonsole 1 bei ausreichender Formsteifigkeit, hat diese sowohl an ihrem inneren Bodenbereich 26 als auch an ihren Längsund Seitenwänden 27, 28 Verstärkungsrippen 29, 30, 31.

## Patentansprüche

1. Wagenheberkonsole für die Befestigung an einem Fahrzeugboden, mit einer in montierten Zustand der Konsole dem Fahrzeugboden (5) zugekehrten Stützfläche (23) und einem diese aufweisenden Konsolenkörper (2), von dem ein für den Eingriff in ein Wandloch (6) des Fahrzeugbodens (5) bestimmter Fortsatz (9) absteht, wobei der Fortsatz (9) einen inneren, einstückig am Konsolenkörper (2) angeformten Zentrierkörper (4) und einen äusseren, am Wandloch (6) verrastbaren Klinkenkörper (8) aufweist, **dadurch gekennzeichnet, dass** der Klinkenkörper (8) mit dem Zentrierkörper (4) über eine zentrale Spannschraube (15) miteinander verbunden sind.

2. Wagenheberkonsole nach Anspruch 1, **dadurch gekennzeichnet, dass** der Klinkenkörper (8) einen mit der Spannschraube (15) in Eingriff stehenden Kopfteil (10) aufweist, an dem in Richtung zum Konsolenkörper (2) verlaufende Klinkenschenkel (11,12) angeformt sind, so dass diese in Kontakt mit dem Rand des Wandlochs (6) im Fahrzeugboden (5) elastisch einwärts biegbar sind, um mit ihren Enden hinter ihm zu verrasten.

3. Wagenheberkonsole nach Anspruch 2, **dadurch gekennzeichnet, dass** zumindest ein an die Stützfläche (23) des Konsolenkörpers (2) angrenzender Bereich (7) des Zentrierkörpers (4) für den formschlüssigen Eingriff einen dem Wandloch (6) angepassten Durchmesser aufweist und äussere Schrägflächen (13,14) der Klinkenschenkel (11,12) zueinander kreissymmetrisch angeordnet sind, so dass sie beim Eindrücken den Zentrierkörper (4) zum Lochrand hin zentrieren.

4. Wagenheberkonsole nach Anspruch 3, **dadurch gekennzeichnet, dass** der an die Stützfläche (23) des Konsolenkörpers (2) angrenzende Bereich des Zentrierkörpers (4) einen konischen Kragen (7) bildet.

5. Wagenheberkonsole nach einem der Ansprüche 1 bis 4, **dadurch gekennzeichnet, dass** der Zentrierkörper (4) hohl ausgebildet ist, die Spannschraube (15) sich durch seine Stirnwand (16) erstreckt und mit einem Kopfteil (10) des Klinkenkörpers (4) in Gewindeeingriff steht.

6. Wagenheberkonsole nach einem der Ansprüche 1 bis 5, **dadurch gekennzeichnet, dass** Klinkenschenkel (11,12) des Klinkenkörpers (8) in Einrastposition am Wandloch (6) an einem sockelartig erweiterten Bereich (21) des Zentrierkörpers (4) anliegen, so dass dieser die Klinkenschenkel (11,12) in dieser Position verriegelt, wobei ein inneres, über Stützflächen (19,20) der Klinkenschenkel (11,12) hinaus verlängertes Schenkelende (22,23) den Rand des Wandloches (6) hintergreift.

7. Wagenheberkonsole nach einem der Ansprüche 1 bis 6, **dadurch gekennzeichnet, dass** der Konsolenkörper (2) eine für den Eingriff eines Wagenhebers (5) bestimmten Eingriffsraum (3) aufweist, wobei zumindest seine die Stützfläche (23) aufweisende Wand Verstärkungsrippen (29) aufweist.

8. Wagenheberkonsole nach einem der Ansprüche 1 bis 7, **dadurch gekennzeichnet, dass** der der Konsolenkörper (2) länglich ist und an seinen Seitenwänden (27,28) Verstärkungsrippen (30,31) vorgesehen sind.

## Claims

1. A car jack bracket for attachment onto a vehicle floor, having, in the fitted state, a support surface (23) facing towards the vehicle floor (5) and a bracket body (2) featuring the latter from which an extension (9) intended for engagement in a wall hole (6) of the vehicle floor (5) projects, the extension (9) having an inner centering body (4) moulded as one piece onto the bracket body (2) and an outer bolt body (8) that can lock into the wall hole (6), **characterised in that** the bolt body (8) and the centering body (4) are connected to one another by means of a central tightening screw (15).

2. The car jack bracket according to Claim 1, **characterised in that** the bolt body (8) has a head unit (10) standing in engagement with the tightening screw (15) on which bolt side pieces (11, 12) are moulded on in the direction extending towards the bracket body (2) so that the latter can be bent elastically inwards in contact with the edge of the wall hole (6) in the vehicle floor (5) so as to lock with their ends behind the latter.

3. The car jack bracket according to Claim 2, **characterised in that** at least one region (7) of the centring body (4) adjacent to the support surface (23) of the bracket body (2) has a diameter matched to the wall hole (6) for the form-fit engagement, and outer inclined surfaces (13,14) of the bolt side pieces (11,12) are disposed circumferentially symmetrically in relation to one another so that they centre towards the edge of the hole when the centring body (4) is pushed in.

4. The car jack bracket according to Claim 3, **characterised in that** the region of the centring body (4) adjacent to the support surface (23) of the bracket body (2) forms a conical collar (7).

5. The car jack bracket according to any of Claims 1 to 4, **characterised in that** the centring body (4) is hollow in form, the tightening screw (15) extends through its face wall (16) and is in threaded engagement with a head unit (10) of the bolt body (4).

6. The car jack bracket according to any of Claims 1 to 5, **characterised in that** bolt side pieces (11,12) of the bolt body (8) lie in the engaged position in the wall hole (6) against a region (21) of the centring body (4) extended like a pedestal so that the latter locks the bolt side pieces (11,12) in this position, an inner side piece end (22,23) extended over support surfaces (19,20) of the bolt side pieces (11,12) engaging behind the edge of the wall hole (6).

7. The car jack bracket according to any of Claims 1 to 6, **characterised in that** the bracket body (2) has an engagement space (3) intended for the engagement of a car jack (5), at least its wall having the support surface (23) having reinforcement ribs (29).

8. The car jack bracket according to any of Claims 1 to 7, **characterised in that** the bracket body (2) is oblong and reinforcement ribs (30,31) are provided on its side walls (27, 28).

## Revendications

1. Console de cric de voiture pour la fixation sur un plancher de véhicule automobile, comprenant une surface d'appui (23) tournée vers le plancher de véhicule automobile (5) dans l'état monté de la console et un corps de console (2) qui présente celle-ci et depuis lequel un appendice (9) destiné à l'engagement dans un trou de paroi (6) du plancher de véhicule automobile (5) dépasse, dans lequel l'appendice (9) présente un corps de centrage intérieur (4) conformé en un seul tenant sur le corps de console (2) et un corps de cliquet extérieur (8) qui peut être enclenché sur le trou de paroi (6), **caractérisée en ce que** le corps de cliquet (8) et le corps de centrage (4) sont reliés entre eux par l'intermédiaire d'une vis de serrage centrale (15).

2. Console de cric de voiture selon la revendication 1, **caractérisée en ce que** le corps de cliquet (8) présente une partie de tête (10) qui se trouve en engagement avec la vis de serrage (15) et sur laquelle des côtés latéraux de cliquet (11, 12) qui s'étendent dans la direction du corps de console (2) sont conformés de telle sorte que ceux-ci peuvent être cintrés élastiquement vers l'intérieur en contact avec le bord du trou de paroi (6) pour s'enclencher derrière celui-ci avec leurs extrémités.

3. Console de cric de voiture selon la revendication 2, **caractérisée en ce qu'**au moins une zone (7) du corps de centrage (4) qui est limitrophe à la surface d'appui (23) du corps de console (2) présente un diamètre adapté au trou de paroi (6) pour l'engagement par coopération de formes et **en ce que** des surfaces extérieures obliques (13, 14) des côtés latéraux de cliquet (11, 12) sont agencées l'une par rapport a l'autre en symétrie circulaire de manière à se centrer par rapport au bord de trou lors de l'enfoncement du corps de centrage (4).

4. Console de cric de voiture selon la revendication 3, **caractérisée en ce que** la zone limitrophe à la surface d'appui (23) du corps de console (2) forme une collerette conique (7).

5. Console de cric de voiture selon l'une des revendications 1 à 4, **caractérisée en ce que** le corps de centrage (4) est réalisé en étant creux et **en ce que** la vis de serrage (15) s'étend à travers sa paroi frontale (16) et se trouve en engagement de filetage avec une partie de tête (10) du corps de cliquet (4).

6. Console de cric de voiture selon l'une des revendications 1 à 5, **caractérisée en ce que** les côtés latéraux de cliquet (11, 12) du corps de cliquet (8) viennent s'appliquer sur le trou de paroi (6) en position d'enclenchement sur une zone élargie à la manière d'un socle (21) du corps de centrage (4) de telle sorte que celui-ci verrouille les côtés latéraux de cliquet (11, 12) dans cette position et dans lequel une extrémité de côté latéral (22, 23) prolongée au-delà des surfaces d'appui (19, 20) des côtés latéraux de cliquet (11, 12) vient en prise par l'arrière sur le bord de paroi (6).

7. Console de cric de voiture selon l'une des revendications 1 à 6, **caractérisée en ce que** le corps de console (2) présente une zone d'engagement (3) destinée à l'engagement d'un cric de voiture (5) et dans lequel au moins sa paroi qui présente la surface d'appui (23) présente des nervures de renforcement (29).

8. Console de cric de voiture selon l'une des revendications 1 à 7, **caractérisée en ce que** le corps de console (2) est allongé et **en ce que** des nervures de renforcement (30, 31) sont prévues sur ses parois latérales (27, 28).
